# EUROPÄISCHE PATENTSCHRIFT

(11) **EP 3 770 200 B1**
(45) Veröffentlichungstag und Bekanntmachung des Hinweises auf die Patenterteilung: **28.12.2022**
(21) Anmeldenummer: 20186778.5
(22) Anmeldetag: 20.07.2020
(51) Int. Cl.: C08G 59/50, C08G 59/64, C09D 163/00

(54) **EPOXIDHARZ-ZUSAMMENSETZUNG FÜR CHEMIKALIENRESISTENTE BESCHICHTUNGSZWECKE**
EPOXY RESIN COMPOSITION FOR CHEMICAL-RESISTANT COATING APPLICATIONS
COMPOSITION DE RÉSINE ÉPOXY POUR DES APPLICATIONS DE REVÊTEMENT RÉSISTANT AUX PRODUITS CHIMIQUES

(30) Priorität: 25.07.2019 EP 19188363
(43) Veröffentlichungstag der Anmeldung: 27.01.2021
(73) Patentinhaber: Sherwin-Williams Coatings Deutschland GmbH, 42389 Wuppertal (DE)
(72) Erfinder: Viertel, Johannes, 71665 Vahihingen/Enz (DE); Neuer, Lydia, 71665 Vaihingen (DE)
(74) Vertreter: Novagraaf Group

(56) Entgegenhaltungen:
- US-A1- 2009 226 729

## Beschreibung

### Technisches Gebiet

Die Erfindung betrifft das Gebiet der kalthärtenden Epoxidharz-Zusammensetzungen, welche als Schutzbeschichtung vor Chemikalien für die Innenbereiche von Rohrleitungen und Tankanlagen, Armaturen in Industrieanlagen sowie Auffangwannen einsetzbar ist, insbesondere für Tankinnenbeschichtungen.

### Stand der Technik

Beschichtungsprodukte auf Epoxidharz-Basis für Schutzbeschichtung vor Chemikalien, welche als Beschichtungen oder Anstriche eingesetzt werden, sind im Bauwesen weit verbreitet. Sie bestehen aus flüssigen Harz- und Härterkomponenten, welche vor der Applikation gemischt werden und dann bei Umgebungstemperaturen im Bereich von ca. 5 bis 35°C zur festen Beschichtung ausreagieren.

Die Epoxidharz-Zusammensetzung des Standes der Technik enthalten typischerweise hochmolekulare Novolac-Harze aufgrund der daraus erhaltenen hohen Chemikalienbeständigkeit. Dies erhöht jedoch massiv die Viskosität der Zusammensetzung. Mittels Verdünnern wird die Viskosität solcher Epoxidharz-Zusammensetzung gesenkt, damit sie einfacher applizierbar sind. Gleichzeitig vermindern jedoch Verdünner die Chemikalienbeständigkeit. Die üblichen Verdünner, wie beispielsweise Benzylalkohol, sind flüchtige Verbindungen (VOC oder SVOC), welche bei der Aushärtung nicht in die Harzmatrix eingebaut werden und somit zu Emissionen führen. Für emissionsarme Produkte, wie sie von Verbrauchern zunehmend nachgefragt werden, können Verdünner deshalb nur in geringer Menge oder gar nicht verwendet werden.

Die US 2009/226729 A1 offenbart eine hochfeste und schnell härtbare Korrosionsschutzbeschichtung mit hohem Feststoffgehalt, umfassend ein Epoxidharz und einen alicyclischen Aminhärter und/oder einen Mannich-Härter, mindestens ein Additiv ausgewählt aus epoxidierten Reaktivverdünnungsmitteln und modifizierten Epoxidharzen und einen Beschichtungsfilmmodifikator.

Insbesondere für die Verwendung als Tankinnenbeschichtungen sind Zusammensetzungen vorteilhaft, welche im Spritzverfahren appliziert werden können, daher eine entsprechend tiefe Viskosität aufweisen und eine Trockenzeit von weniger als 24 Stunden aufweisen, selbst bei tiefen Temperaturen und hoher Luftfeuchtigkeit.

Weiter sind eine ausreichend hohe Shore D-Härte sowie eine klebfreie Oberfläche wichtige Endeigenschaften von solchen Schutzbeschichtungen.

### Darstellung der Erfindung

Aufgabe der vorliegenden Erfindung ist es daher, eine für Beschichtungszwecke geeignete Epoxidharz-Zusammensetzung zur Verfügung zu stellen, die emissionsarm ist, vorzugsweise im Spritzverfahren applizierbar sind, auch bei feuchtkalten Bedingungen schnell aushärtet und dabei mechanisch hochwertige Beschichtungen mit klebfreier Oberfläche und hoher Chemikalienbeständigkeit ergibt.

Diese Aufgabe wird mit der Epoxidharz-Zusammensetzung wie in Anspruch 1 beschrieben gelöst. Überraschenderweise ermöglicht diese Kombination sehr schnell aushärtende Beschichtungen, auch bei Aushärtung in der Kälte. Dabei verfügt die erfindungsgemässe Zusammensetzung über eine sehr niedrige Viskosität, was eine hervorragende Verarbeitbarkeit ermöglicht. Sie braucht dafür keine oder nur wenig Verdünner wie Benzylalkohol und ist somit äussert emissionsarm bzw. -frei. Die ausgehärtete Beschichtung weist eine hervorragende Chemikalienbeständigkeit sowie eine klebfreie Oberfläche mit hoher Shore D-Härte auf.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Epoxidharz-Zusammensetzung umfassend eine Harz-Komponente, welche mindestens ein Epoxidharz A der Formel (I) aufweist 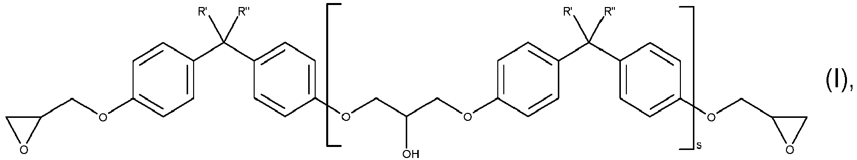 wobei die Substituenten R' und R" unabhängig voneinander entweder für H oder CH₃ stehen und der Index s für einen Wert von 0 bis 1, vorzugsweise kleiner als 0.2, steht, und
- eine Härter-Komponente, welche:
   - mindestens einen Aminhärter **AH1,** umfassend ein dehydratisiertes Reaktionsprodukt aus:
      - Cardanol;
      - Formaldehyd oder Paraformaldehyd;
      - mindestens einem Polyamin;
      - mindestens einer Fettsäure oder Fettsäurepolymer, und
      - mindestens einen Aminhärter **AH2** der Formel (II) aufweist 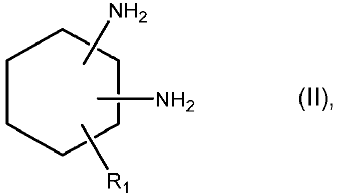 wobei R₁ für H oder CH₃ steht, aufweist.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Aminogruppen bezeichnet.

Mit "Poly" beginnende Substanznamen wie Polyamin, Polyol oder Polyepoxid bezeichnen Substanzen, die formal zwei oder mehr der in ihrem Namen vorkommenden funktionellen Gruppen pro Molekül enthalten.

Als "Verdünner" wird vorzugsweise eine in einem Epoxidharz lösliche und dessen Viskosität senkende Substanz bezeichnet, welche bei der Aushärtung chemisch nicht in das Epoxid-Polymer eingebunden wird.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.

Als "Raumtemperatur" wird eine Temperatur von 23°C bezeichnet.

Unter dem Begriff "klebfrei" wird in diesem Dokument vorzugsweise eine Soforthaftung oder "Tack" verstanden, welche bei 23°C so gering ist, dass beim Drücken mit einem Daumen mit einem Druckaufwand von ca. 5 kg für 1 Sekunde auf die Oberfläche eines 20 Gramm schweren Probenkörpers mit einer Schichtdicke der ausgehärteten Epoxidharz-Zusammensetzung von 0.5 mm der Daumen nicht auf der Oberfläche kleben bleibt bzw. der Probenkörper nicht angehoben werden kann.

Für die im vorliegenden Text erwähnten Normen, Vorgaben oder Prüfvorschriften gelten die am Prioritätstag gültige Version falls nicht anderweitig beschrieben.

Die Harz-Komponente der Epoxidharz-Zusammensetzung umfasst mindestens ein Epoxidharz **A** der Formel (I) 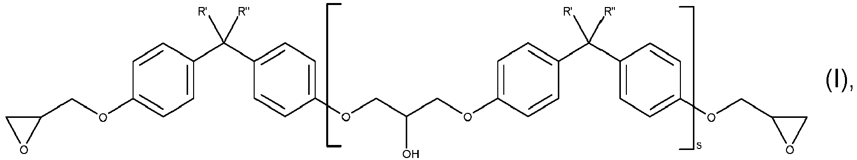 wobei die Substituenten R' und R" unabhängig voneinander entweder für H oder CH₃ stehen und der Index s für einen Wert von 0 bis 1, vorzugsweise kleiner als 0.2, steht.

Der Term "unabhängig voneinander" in der Definition von Gruppen und Resten bedeutet in diesem Dokument jeweils, dass mehrere vorkommende aber in den Formeln gleich bezeichnete Gruppen jeweils unterschiedliche Bedeutungen aufweisen können.

Die flüssigen Harze der Formel (I) sind Diglycidylether von Bisphenol A, Bisphenol F und Bisphenol A / F, wobei A Aceton und F-Formaldehyd darstellt, die als Reaktanten zur Herstellung dieser Bisphenole dienen. Ein Bisphenol A-Flüssigharz weist demgemäß Methylgruppen, ein Bisphenol F-Flüssigharz-Wasserstoffatome und ein Bisphenol A / F-Flüssigharz sowohl Methylgruppen als auch Wasserstoffatome als R' und R" in Formel (I) auf. Im Fall von Bisphenol F können auch Stellungsisomere vorhanden sein, die sich insbesondere von 2,4'- und 2,2'-Hydroxyphenylmethan ableiten.

Solche Flüssigharze sind im Handel erhältlich, beispielsweise als Araldite^{®} GY 204, Araldite^{®} GY 250, Araldite^{®} GY 260, Araldite^{®} GY 281, Araldite^{®} GY 282, Araldite^{®} GY 285, Araldite^{®} PY 304, Araldite^{®} PY 720 ( von Huntsman); D.E.R.^{®} 330, D.E.R.^{®} 331, D.E.R.^{®} 332, D.E.R.^{®} 336, D.E.R.^{®} 354, D.E.R.^{®} 351, D.E.R.^{®} 352, D.E.R.^{®} 356 (von Dow); Epikote^{®} 162, Epikote^{®} 827, Epikote^{®} 828, Epikote^{®} 158, Epikote^{®} 862, Epikote^{®} 169, Epikote^{®} 144, Epikote^{®} 238, Epikote^{®} 232, Epikote^{®} 235 (von Hexion), Epalloy^{®} 7190, Epalloy^{®} 8220, Epalloy^{®} 8230, Epalloy^{®} 7138, Epalloy^{®} 7170, Epalloy^{®} 9237-70 (von CVC), Chem Res^{®} E 20, Chem Res^{®} E 30 (von Cognis), Beckopox^{®} EP 116, Beckopox^{®} EP 140 ( von Cytec).

Vorzugsweise weist die Zusammensetzung im Wesentlichen keine sogenannten Epoxid-Novolake auf. Diese weisen insbesondere die folgende Formel auf: 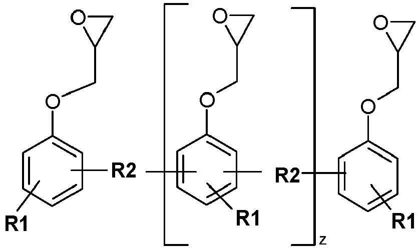 mit **R2=** 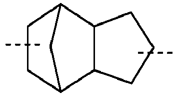 oder CH2, **R1** = H oder Methyl und z = 0 bis 7.

Insbesondere handelt es sich hierbei um Phenol- oder Kresol-Epoxid-Novolake (**R2** = CH₂). Solche Epoxidharze sind unter dem Handelnamen EPN oder ECN sowie Tactix^{®} von Huntsman oder unter der Produktereihe D.E.N. ^{™} von Dow Chemical kommerziell erhältlich.

Vorzugsweise beträgt der Anteil der erwähnten Epoxid-Novolake weniger als 15 Gew.-%, weniger als 10 Gew.-%, insbesondere weniger als 5 Gew.-%, weniger als 2 Gew.-%, weniger als 1 Gew.-%, weniger als 0.5 Gew.-%, am meisten bevorzugt weniger als 0.1 Gew.-%, bezogen auf das Gesamtgewicht der Epoxidharz-Zusammensetzung. Dies ist einer hohen Chemikalienbeständigkeit bei einer gleichzeitig tiefen Viskosität der vermischten Epoxidharz-Zusammensetzung zuträglich.

Die Härter-Komponente der Epoxidharz-Zusammensetzung umfasst mindestens einen Aminhärter **AH1,** umfassend ein dehydratisiertes Reaktionsprodukt aus:
- Cardanol;
- Formaldehyd oder Paraformaldehyd;
- mindestens einem Polyamin; und
- mindestens einer Fettsäure oder Fettsäurepolymer.

Vorzugsweise beträgt das Molverhältnis von (Cardanol) : (Formaldehyd oder Paraformaldehyd) : (Polyamin) : (Fettsäure oder Fettsäurepolymer) = 1: 0,5-2,0: 0,5-2,0: 0,5-2,0.

Vorzugsweise ist das Polyamin ausgewählt aus der Gruppe bestehend aus Ethylendiamin, Diethylentriamin, Triethylentetramin, Tetraethylenpentamin, Methylcyclopentandiamin, insbesondere 3-Methylcyclopentan-1,2-diamin, und m-Xylylendiamin.

Besonders bevorzugt ist das Polyamin ausgewählt aus der Gruppe bestehend aus Diethylentriamin und m-Xylylendiamin, am meisten bevorzugt besteht das Polyamin aus einer Mischung von Diethylentriamin und m-Xylylendiamin.

Vorzugsweise ist die Fettsäure Caprylsäure, Caprinsäure, C 16-18 - Stearinsäure, Linolsäure, Sojaölsäure, Baumwollsamenölsäure, Tallölsäure, Rapssamenölsäure, Tungöl, Palmitinsäure, Sonnenblumenöl, Ölsäure und Sesamölsäure. Vorzugsweise ist das Fettsäurepolymer eine Dimerfettsäure oder Polyfettsäure von Linolsäure, Sojabohnenölsäure, Baumwollsamenölsäure, Tallölsäure, Rapssäure, Tungöl oder Palmitinsäure.

Vorzugsweise ist die Dimerfettsäure oder Polypolyfettsäure eine zwei- oder mehrbasige Säure, die durch eine Diels-Alder-Reaktion aus zwei oder mehr Teilen einer ungesättigten Fettsäure wie Linolsäure, Sojabohnenölsäure oder dergleichen hergestellt wird.

Besonders bevorzugt handelt es sich bei der Fettsäure um eine Fettsäure ausgewählt aus der Gruppe bestehend aus Tallöl, Ölsäure und Soja-Ölsäure. Besonders bevorzugt handelt es sich bei dem Fettsäurepolymer um ein Fettsäurepolymer ausgewählt aus der Gruppe bestehend aus BaumwollsamenÖlsäuredimer und Wolframöldimer.

Ein mögliches Herstellungsverfahren des obigen Aminhärters **AH1** umfasst vorzugsweise die Schritte: Mischen von Fettsäure oder Fettsäurepolymer und Polyamin, Erhitzen auf 170-250°C, Halten der Reaktion für 2-10 Stunden, Abkühlen, Zugeben von Cardanol, Formaldehyd oder Paraformaldehyd, gemischt, auf 70 bis 130°C erhitzt, Wärmekonservierungsreaktion für 2 bis 6 Stunden, Dehydratisierung, um den vorgenannten Aminhärter **AH1** zu erhalten, vorzugsweise Abkühlen auf 30 bis 60°C.

Ein weiteres mögliches Herstellungsverfahren des obigen Aminhärters **AH1** umfasst vorzugsweise die folgenden Schritte: Mischen von Cardanol, Polyamin, Formaldehyd oder Paraformaldehyd, Erhitzen auf 70-130°C und 2-6-stündige isolierende Reaktion. Zugabe von Fettsäure oder Fettsäurepolymer, Erhitzen auf 170-250°C, 2-6-stündiges Halten der Reaktion, Dehydratisierung, um den vorgenannten Aminhärter **AH1** zu erhalten.

Besonders bevorzugt umfasst der Aminhärter **AH1:**
- ein dehydratisiertes Reaktionsprodukt aus:
   - Cardanol;
   - Formaldehyd oder Paraformaldehyd;
   - Mischung von Diethylentriamin und m-Xylylendiamin;
   - mindestens einer Fettsäure oder Fettsäurepolymer, in einer Menge von 40 - 70 Gew.-%, insbesondere 50 - 60 Gew.-%, bezogen auf das Gesamtgewicht des Aminhärter **AH1;** sowie
   - 1,3-Bis(aminomethyl)cyclohexan, in einer Menge von 30 - 50 Gew.-%, insbesondere 35 - 40 Gew.-%, bezogen auf das Gesamtgewicht des Aminhärter **AH1;** sowie
   - Diethylentriamin, in einer Menge von 2 - 10 Gew.-%, insbesondere 4 - 6 Gew.-%, bezogen auf das Gesamtgewicht des Aminhärter **AH1.**

Die Härter-Komponente der Epoxidharz-Zusammensetzung umfasst weiter mindestens einen Aminhärter **AH2** der Formel (II) 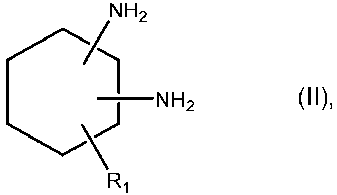 wobei R₁ für H oder CH₃ steht.

Überraschenderweise wurde gefunden, dass durch die Zugabe von einem Aminhärter **AH2** der Formel (II) die Oberflächenklebrigkeit der ausgehärteten Epoxidharz-Zusammensetzung reduziert werden konnte ohne die anderen Eigenschaften, insbesondere Viskosität, Chemikalienbeständigkeit und tiefe Emissionswerte zu beeinträchtigen. Dies ist beispielsweise im Vergleich von Ex.1 mit den Vergleichsbeispielen Ref.4-6 in Tabelle 1 ersichtlich.

Vorzugsweise handelt es sich um 1-Methylcyclohexyl-2,4-diamin (2,4-MCDA), 1-Methylcyclohexyl-2,6-diamin (2,6-MCDA) oder ein Gemisch davon, insbesondere um ein Gemisch davon.

Vorzugsweise beträgt das Gewichtsverhältnis von **HA1/AH2** von 2-7, insbesondere 3-6, besonders bevorzugt von 4-5.

Ein Wert von < 2 ist dahingehend nachteilig, dass dadurch eine längere Trockenzeit erhalten wird.

Ein Wert von > 7 ist dahingehend nachteilig, dass dadurch die Oberflächenklebrigkeit der ausgehärteten Zusammensetzung zunimmt.

Vorzugsweise beträgt der Anteil der Summe aus Aminhärter **AH1** und Aminhärter **AH2** mehr als 50 Gew.-%, insbesondere mehr als 60 Gew.-%, bezogen auf die Gesamtmenge an Polyaminen der Epoxidharz-Zusammensetzung.

Die Epoxidharz-Zusammensetzung kann zusätzlich weitere Bestandteile enthalten.

Bevorzugt enthält sie mindestens einen weiteren Bestandteil ausgewählt aus Epoxidgruppen-haltigen Reaktivverdünnern, weiteren Polyaminen, Verdünnern und Füllstoffen.

Bevorzugte Epoxidgruppen-haltige Reaktivverdünner sind insbesondere Glycidylether von ein- oder mehrwertigen Phenolen oder aliphatischen oder cycloaliphatischen Alkoholen, wie insbesondere Glycidylether von zwei oder mehrwertigen Alkoholen, oder Monoglycidylether wie insbesondere Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃- bis C₁₅-Alkylgly-cidylether.

Bevorzugt liegt der Gehalt an Epoxidgruppen-haltigen Reaktivverdünnern in der Epoxidharz-Zusammensetzung im Bereich von 0 bis 20 Gewichts-%, besonders bevorzugt 0 bis 15 Gewichts-%, 0 bis 10 Gewichts-%, 0 bis 7.5 Gewichts-%, 0 bis 5 Gewichts-%, insbesondere 0 bis 3.5 Gewichts-%. Solche Zusammensetzungen sind besonders chemikalienbeständig.

Geeignete weitere Polyamine sind insbesondere ausgewählt aus der Liste bestehend aus aliphatischen, cycloaliphatischen und arylaliphatische primären Di- und Triaminen, insbesondere ausgewählt aus der Liste bestehend aus 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPDA), 2,5(2,6)-Bis(aminomethyl)bicyclo[2.2.1]heptan (NBDA), 3(4),8(9)-Bis(aminomethyl)tricyclo[5.2.1.0^{2,6}]decan, 1,8-Menthandiamin, 3,9-Bis(3-aminopropyl)-2,4,8,10-tetraoxaspiro[5.5]undecan, 1,3-Bis(aminomethyl)benzol (MXDA) und 1,4-Bis(aminomethyl)benzol.

Vorzugsweise beträgt der Anteil der Summe aus Aminhärter **AH1** und Aminhärter **AH2** mehr als 50 Gew.-%, insbesondere mehr als 60 Gew.-%, bezogen auf die Gesamtmenge an Polyaminen der Epoxidharz-Zusammensetzung.

Geeignete Verdünner sind insbesondere ausgewählt aus der Liste bestehend aus 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol, styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate und Benzoate.

Bevorzugte Verdünner sind Benzylalkohol, 2-Phenoxyethanol, Cardanol, styrolisiertes Phenol, Diisopropylnaphthalin oder phenolgruppenhaltige aromatische Kohlenwasserstoffharze. Besonders bevorzugt ist Benzylalkohol, Diisopropylnaphthalin oder Cardanol, insbesondere Benzylalkohol.

Bevorzugt liegt der Gehalt an Verdünnern in der Epoxidharz-Zusammensetzung im Bereich von 0 bis 20 Gewichts-%, besonders bevorzugt 0 bis 15 Gewichts-%, 0 bis 10 Gewichts-%, 0 bis 7.5 Gewichts-%, insbesondere 0 bis 5 Gewichts-%. Solche Zusammensetzungen sind besonders emissionsarm.

In einer bevorzugten Ausführungsform enthält die Epoxidharz-Zusammensetzung 1 bis 5 Gewichts-%, insbesondere 2 bis 4 Gewichts-%, Verdünner, insbesondere Benzylalkohol. Eine solche Zusammensetzung ermöglicht emissionsarme Beschichtungen, welche über eine hohe Chemikalienresistenz verfügen sowie emissionsarm sind.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsieb, Aluminiumoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln. Bevorzugt ist Calciumcarbonat, Quarzmehl und Talk.

Vorzugsweise beträgt der Anteil an Füllstoffen 10 - 50 Gew.-%, insbesondere 15 - 45 Gew.-%, 20 - 40 Gew.-%, bevorzugt 25 - 30 Gew.-%, bezogen auf das Gesamtwicht der Epoxidharz-Zusammensetzung.

Gegebenenfalls enthält die Epoxidharz-Zusammensetzung weitere Hilfs- und Zusatzstoffe, insbesondere die Folgenden:
- Pigmente, insbesondere Titandioxid, Eisenoxide oder Chrom(III)oxid, insbesondere in einer Menge von 5 - 15 Gew.-%, bezogen auf das Gesamtgewicht der Epoxidharz-Zusammensetzung;
- Rheologie-Modifizierer, insbesondere Verdicker oder Antiabsetzmittel;
- Haftverbesserer, insbesondere Organoalkoxysilane;
- Additive, insbesondere Netzmittel, Verlaufmittel, Entschäumer, Entlüfter, Stabilisatoren gegen Oxidation, Wärme, Licht oder UV-Strahlung oder Biozide.

In der Epoxidharz-Zusammensetzung liegt das Verhältnis der Anzahl von gegenüber Epoxidgruppen reaktiven Gruppen, insbesondere Aminwasserstoffe, gegenüber der Anzahl Epoxidgruppen bevorzugt im Bereich von 0.7 bis 1.3, insbesondere 0.8 bis 1.2, 0.85 bis 1.15, am meisten bevorzugt 0.9 bis 1.1. Dies ist dahingehend von Vorteil, dass dadurch eine hohe chemische Beständigkeit erhalten wird.

Die in der Epoxidharz-Zusammensetzung vorhandenen Aminwasserstoffe und gegebenenfalls vorhandene weitere gegenüber Epoxidgruppen reaktive Gruppen reagieren mit den Epoxidgruppen unter deren Ringöffnung (Additionsreaktion). Als Ergebnis hauptsächlich dieser Reaktion polymerisiert die Zusammensetzung und härtet dadurch aus.

Die Harz- und die Härter-Komponente der Epoxidharz-Zusammensetzung werden jeweils in einem eigenen Gebinde gelagert. Weitere Bestandteile der Epoxidharz-Zusammensetzung können als Bestandteil der Harz- oder der Härter-Komponente vorhanden sein. Ebenfalls möglich ist, dass weitere Bestandteile als eigene, weitere Komponente vorhanden sind.

Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Zur Anwendung der Epoxidharz-Zusammensetzung werden die Komponenten kurz vor oder während der Applikation miteinander vermischt.

Die Vermischung der Komponenten erfolgt mittels eines geeigneten Verfahrens; sie kann kontinuierlich oder batchweise erfolgen. Die Vermischung erfolgt insbesondere bei Umgebungstemperatur, welche typischerweise im Bereich von 5 bis 50°C, bevorzugt 10 bis 30°C, liegt.

Mit der Vermischung der beiden Komponenten beginnt die Aushärtung durch chemische Reaktion. Dabei reagieren die in der Epoxidharz-Zusammensetzung vorhandenen Aminwasserstoffe und gegebenenfalls vorhandene weitere gegenüber Epoxidgruppen reaktive Gruppen mit den Epoxidgruppen, wie vorgängig beschrieben.

Die Aushärtung erfolgt typischerweise bei einer Temperatur im Bereich von 0 bis 50°C. Bevorzugt erfolgt sie bei Umgebungstemperatur, insbesondere bei 5 bis 40°C, bevorzugt 10 bis 30°C, und erstreckt sich vorzugsweise von 4 - 24 Stunden, insbesondere von 6 - 18 Stunden.

Bevorzugt weist die Zusammensetzung eine Minute nach dem Vermischen der beiden Komponenten eine Viskosität bei 23°C im Bereich von 1000 - 5000 mPa*s, von 1500 - 4000 mPa*s, von 2000 - 3500 mPa*s, vorzugsweise 2400 - 3200 mPa*s, insbesondere bevorzugt 2600 - 3000 mPa*s, auf. Die Viskosität wird vorzugsweise gemessen wie im Beispielteil beschrieben.

Ein weiterer Gegenstand der Erfindung ist somit eine ausgehärtete Zusammensetzung erhalten aus der Aushärtung der Epoxidharz-Zusammensetzung wie im vorliegenden Dokument beschrieben.

Bei der Applikation kann die frisch vermischte, noch flüssige Zusammensetzung als Beschichtung auf eine senkrechte, waagrechte oder geneigte Fläche appliziert werden. Vorzugsweise wird die Zusammensetzung durch Spritzen appliziert, vorzugsweise mit einem Spritzdruck von mehr als 50 bar, insbesondere mehr als 100 bar. Sie kann jedoch auch appliziert werden, indem sie auf ein Substrat gegossen und anschliessend flächig bis zur erwünschten Schichtdicke verteilt wird, beispielsweise mittels einer Rolle, einer Bürste oder einem Pinsel.

In einem weiteren Aspekt betrifft die vorliegende Erfindung daher ein Verfahren zur Applikation der vorgehend genannten gemischten Zusammensetzung als Beschichtung auf ein Substrat, insbesondere durch Spritzen, vorzugsweise mit einem Spritzdruck von mehr als 50 bar, insbesondere mehr als 100 bar. Vorzugsweise handelt es sich um die nachfolgend als bevorzugt aufgeführte Substrate

Vorzugsweise wird dabei eine Beschichtung mit einer Schichtdicke im Bereich von 200 bis 1000 µm, 300 bis 900 µm, insbesondere 400 bis 800 µm, erhalten.

Die Zusammensetzung wird vorzugsweise nicht auf einen Epoxidharz-basierten Primer aufgebracht. Solche Primer werden üblicherweise so appliziert, dass nach dem Applizieren eine Primerschicht in einer Schichtdicke im Bereich von 80 bis 500 µm, insbesondere 100 bis 300 µm, auf dem Substrat verbleibt.

Solche Primer werden typischerweise dazu verwendet, die Haftung zwischen einem Substrat und einer Schutzbeschichtung zu verbessern. Überraschenderweise wurde bei der erfindungsgemässen Zusammensetzung einer derart gute Haftung auf nachfolgend genannten Substraten gefunden, dass die Verwendung eines solchen Primer nicht notwendig ist. Ein weiterer Vorteil eines Weglassens eines solchen Primers ist weiter eine Verbesserung der Chemikalienbeständigkeit.

Geeignete Substrate, welche mit der Zusammensetzung beschichtet werden können, sind insbesondere Beton und Metalle oder Legierungen wie Aluminium, Kupfer, Eisen, Stahl, Buntmetalle, inklusive oberflächenveredelte Metalle oder Legierungen wie verzinkte oder verchromte Metalle. Besonders bevorzugt handelt es sich um Beton oder Stahl, am meisten bevorzugt um Stahl. Vorzugsweise handelt es sich bei den vorgenannten Beton, Metallen oder Legierungen um mit Chemikalien belastete Substrate.

Vorzugsweise handelt es sich bei den vorgehend erwähnten Substraten um Objekte ausgewählt aus der Liste bestehend aus Oberflächen im Innern von Rohrleitungen und Tankanlagen, Armaturen in Industrieanlagen sowie Auffangwannen, insbesondere Tankanlagen und Auffangwannen, am meisten bevorzugt Tankanlagen.

Die Substrate können bei Bedarf vor dem Applizieren vorbehandelt werden, insbesondere durch physikalische und/oder chemische Reinigungsverfahren.

Besonders bevorzugt weisen die vorgehend genannten Substrate keinen Primer auf ihrer Oberfläche auf, insbesondere keinen vorgehend genannten Epoxidharz-basierten Primer.

In einem weiteren Aspekt der Erfindung handelt es sich daher um die Verwendung der erfindungsgemässen Zusammensetzung als Beschichtung, insbesondere zum Schutz vor der Einwirkung von Chemikalien, welche in Kontakt sind mit den vorgehend genannten Substraten und Objekten.

Vorzugsweise erfüllt die Zusammensetzung in der erfindungsgemässen Verwendung die Anforderungen der Chemikalienbeständigkeit, wie sie im Beispielteil beschrieben sind.

Vorzugsweise handelt es sich um eine Verwendung in einem Beschichtungssystem, umfassend
- vorzugsweise keinen Primer, insbesondere einen Epoxidharz-basierten Primer, und
- mindestens eine Schicht der vorgehend beschriebenen Zusammensetzung.

Weiter ist es vorteilhaft, wenn die Zusammensetzung eine Schichtdicke im Bereich von 200 bis 1000 µm, 300 bis 900 µm, insbesondere 400 bis 800 µm, aufweist.

Aus dem vorgehend genannten Verfahren oder aus der Applikation und Aushärtung der Zusammensetzung wird ein Artikel erhalten. In einem weiteren Aspekt betrifft die vorliegende Erfindung einen solchen Artikel. Vorzugsweise handelt es sich um ein vorgehend genanntes Objekt ausgewählt aus der Liste bestehend aus Rohrleitungen, Tankanlagen, Armaturen in Industrieanlagen sowie Auffangwannen, insbesondere Tankanlagen und Auffangwannen.

Die erfindungsgemässe Zusammensetzung weist vorzugsweise folgende Eigenschaften auf:
- Trockengrad (wie im Beispielteil beschrieben, bei 23°C und 50% Luftfeuchte); < 24 h, vorzugsweise ≤ 20h, insbesondere ≤ 10 h, besonders bevorzugt ≤ 8 h.
- Trockengrad (wie im Beispielteil beschrieben, bei 5°C und 80% Luftfeuchte); < 24 h, vorzugsweise ≤ 20h, insbesondere ≤ 16 h.
- Chemikalienbeständigkeit (wie im Beispielteil beschrieben).
- Viskosität eine Minute nach dem Vermischen der beiden Komponenten (wie im Beispielteil beschrieben); < 5000 mPa*s, vorzugsweise ≤ 4000 mPa*s, insbesondere 1500 - 4000 mPa*s, von 2000 - 3500 mPa*s, 2400 - 3200 mPa*s, insbesondere bevorzugt 2600 - 3000 mPa*s.
- Klebfreiheit (wie im Beispielteil beschrieben)
- Shore D-Härte (wie im Beispielteil beschrieben); > 70, insbesondere > 75, bevorzugt > 80.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW' steht für das Aminwasserstoff-Equivalentgewicht.

"EEW" steht für das Epoxid-Equivalentgewicht.

### Verwendete Substanzen:

| | |
|---|---|
| Epoxidharz A | BECKOPOX EP 116, A/F-Flüssigharz, EEW ca. 175 - 185 g/Eq (von Allnex) |
| DLVNE-59 | DLVNE-59, Novolac-Flüssigharz modifiziert mit einem cycloaliphatischen Polyglycidylether, EEW ca. 160 - 175 g/Eq (von Olin) |
| DLVNE-61 | DLVNE-61, Novolac-Flüssigharz modifiziert mit einem cycloaliphatischen Polyglycidylether, EEW ca. 155 - 170 g/Eq (von Olin) |
| D.E.N 438 | D.E.N 438, Novolac-harz hochviskos, EEW ca. 176 - 181 g/Eq (von Olin) |
| AH1 | Cardolite GX-5600, Anteil dehydratisiertes Reaktionsprodukt 57 Gew.-%, Aminwert 524.8 (mg KOH/g), AHEW 69 g/Eq (von Cardolite Corporation) |
| AH2 | Baxxodur^{®} ECX 210, Gemisch aus 2,4-MCDA und 2,6-MCDA, Aminwert 870 (mg KOH/g) (von BASF SE). |
| ANCAMINE | ANCAMINE 2432, Mischung aus Benzylakohol, m-Xylylendiamin und Polymer aus m-Xylylendiamin mit Phenol und Formaldehyd, AHEW 88 g/Eq (von Evonik) |
| Beckopox 633 | Beckopox 633, Mischung aus Benzylakohol, Isophorondiamin und aliphatischem Polyamin, AHEW 117 g/Eq (von Allnex) |
| Kieselsäure | Pyrogene Kieselsäure |
| Farbpigment | Titaniumdioxid |
| Quarzmehl | Quarzmehl |
| Talk | Talk |
| Benzylalkohol | Benzylalkohol |
| Xylol | Xylol |

### Herstellung von Epoxidharz-Zusammensetzungen:

### Beispiele Ref.1-6 und Ex.1:

Für jedes Beispiel wurden die in der Tabelle 1 angegebenen Inhaltsstoffe der Harz-Komponente in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt.

Ebenso wurden die in der Tabelle 1 angegebenen Inhaltsstoffe der HärterKomponente verarbeitet und aufbewahrt.

Anschliessend wurden die beiden Komponenten jeder Zusammensetzung mittels des Zentrifugalmischers zu einer homogenen Flüssigkeit verarbeitet und diese unverzüglich folgendermassen geprüft:
Die **Viskosität** wurde 1 Minute nach dem Vermischen der Harzkomponente mit der Härterkomponente mit einem Rheometer Physica MCR 301 (Anton Paar) Platte-Platte Rheometer bei 30°C, mit einem Messsystem PP50 bei einem Messspalt von 0,5 mm und einer Scherrate von 3000 s⁻¹ gemessen.

Die **chemische Beständigkeit** wurde bestimmt durch Einhängen beschichteter Prüftafeln in das entsprechende Medium ermittelt (DIN EN ISO 2812-1). Die Prüftafeln bestehen aus Stahlblech mit den einheitlichen Maßen 80 x 40 x 4 mm und werden vor dem Auftragen der Beschichtungssysteme gestrahlt um einen Rostgrad von Sa 2^{½} gemäss ISO 8501-1 zu erhalten.

Die beschichteten Prüftafeln (Schichtdicke 0.4 mm Seite links und 0.8 mm Seite rechts) wurden vor dem Beginn der Prüfung 7 Tage bei 20°C gelagert. Geprüft wurde über einen Zeitraum von 24 Monaten. Direkt nach der Beanspruchung wurde die Einwirkung der Prüfmedien auf das jeweilige Beschichtungssystem in der Dampf- und Flüssigphase beurteilt.

Eine Beschichtung ist dann beständig gegen das jeweilige Lagermedium, wenn über einen Zeitraum von 24 Monaten keine Blasenbildung, Enthaftung, Faltenbildung oder eine anderweitige Zerstörung auftritt, welche mit blossem Auge, ohne eine optische Vergrösserung, sichtbar ist.

Für die vorliegende Erfindung wurden die Medien IB 1, 2, 3, 3b, 4, 4b, 5b und 7b und reiner Ethanol (100%) gemäss der Liste 3 (Innenbeschichtungen von Stahlbehältern) DIBt (Deutsches Institut für Bautechnik) : Medienlisten für Abdichtungsmittel und Dichtkonstruktionen in Anlagen zum Lagern, Abfüllen und Umschlagen wassergefährdender Stoffe (Version, Februar 2015) geprüft. Wurden eine Beschichtung als beständig befunden wurde dies in Tabelle 1 mit "ja" ausgewiesen. Ansonsten wurde die Bewertung "nein" vergeben und die Prüfmedien aufgeführt, mit welchen die Anforderungen nicht erfüllt wurden.

Der **Trockengrad** TG 6 bei 80µm TFD RT wurde gemäss DIN EN ISO 9117-5 bei 23°C und 50 % rel. Luftfeuchte, respektive bei 5°C und 80 % rel. Luftfeuchte, bestimmt.

Die **Lösungsmittelgehalt** der Zusammensetzungen wurde folgendermassen festgelegt; ein Gesamtanteil an der gemischten Zusammensetzung von weniger als 5 Gew.-% wurde als "Lsm-frei"=ja, ein höherer Gesamtanteil als "Lsm-frei=nein" ausgewiesen.

Für die Bestimmung der **Klebfreiheit im ausgehärteten Zustand** wurde bei 23°C mit einem Daumen mit einem Druckaufwand von ca. 5 kg für 1 Sekunde auf die Oberfläche eines 20 Gramm schweren Probenkörpers bestehend aus ausgehärteter Epoxidharz-Zusammensetzung (Schichtdicke 0.5 mm, ausgehärtet 7 Tage bei 23°C) gedrückt und versucht, den Probenkörper anzuheben. Wurde der Probenkörper angehoben, war die Klebfreiheit nicht gegeben "nein", sonst wurde die Wertung "ja" vergeben.

Die Resultate sind in den Tabelle 1 angegeben.

Für die Bestimmung der **Shore D-Härte** nach DIN 53505 wurden von der Zusammensetzung Ex.1 je zwei zylindrische Prüfkörper (Durchmesser 20 mm, Dicke 5 mm) hergestellt. Einer wurde im Normklima (NK) gelagert und die Härte nach 1 Tag und nach 7 Tagen gemessen (1d NK) bzw. (7d NK), der andere wurde bei 8°C und 80% relativer Feuchtigkeit gelagert und die Härte nach 1 Tag und nach 7 Tagen im kalten Zustand gemessen (1d 8°/80%) bzw. (7d 8°/80%).
1d NK= 80 Shore D
7d NK= 80 Shore D
1d 8°/80%= 75 Shore D
7d 8°/80%= 80 Shore D

Das Verhältnis der Anzahl von Aminwasserstoffen gegenüber der Anzahl Epoxidgruppen ist als "Verhältnis NH/EP" ausgewiesen und beträgt bei allen gemischten Zusammensetzungen 1.

Bei der Zusammensetzung ***Ex.1*** handelt es sich um ein erfindungsgemässes Beispiel. Bei den Zusammensetzungen ***Ref-1*** bis ***Ref-6*** handelt es sich um Vergleichsbeispiele.

Aufgrund der sehr hohen Viskosität des semi-soliden Novolac-harzes D.E.N 438 in Ref.3 konnte eine mischbare Zusammensetzung erst durch Zugabe von mehr als 20 Gew.-teilen Benzylalkohol (bezogen auf das Gesamtgewicht der Zusammensetzung) erreicht werden. Viskosität, chemische Beständigkeit und TG6 konnten daher bei einem Anteil von 3.6 Gew.-teilen Benzylalkohol in Ref.3 nicht bestimmt werden.

**Tabelle 1, *=keine Beständigkeit für Medien 5b und 4b, n.b. = nicht bestimmbar**

| | Ref.1 | Ref.2 | Ref.3 | Ex.1 | Ref.4 | Ref.5 | Ref.6 |
|---|---|---|---|---|---|---|---|
| **Harzkomponente** | | | | | | | |
| Epoxidharz A | | | | 50.2 | 50.2 | 50.2 | 50.2 |
| DLVNE-59 | 50.2 | | | | | | |
| DLVNE-61 | | 50.2 | | | | | |
| D.E.N 438 | | | 50.2 | | | | |
| Kieselsäure | 2 | 2 | 2 | 2 | 2 | 2 | 2 |
| Farbpigment | 12.6 | 12.6 | 12.6 | 12.6 | 12.6 | 12.6 | 12.6 |
| Quarzmehl | 21.6 | 21.6 | 21.6 | 21.6 | 21.6 | 21.6 | 21.6 |
| Talk | 10 | 10 | 10 | 10 | 10 | 10 | 10 |
| Benzylalkohol | 3.6 | 3.6 | 3.6 | 3.6 | 3.6 | 3.6 | 3.6 |
| Total: | 100 | 100 | 100 | 100 | 100 | 100 | 100 |

| **Härterkomponente** | | | | | | | |
|---|---|---|---|---|---|---|---|
| AH1 | 80 | 80 | 80 | 80 | 90 | 80 | 80 |
| AH2 | 10 | 10 | 10 | 10 | 0 | | |
| ANCAMINE | | | | | | 10 | |
| Beckop 633 | | | | | | | 10 |
| Xylol | 10 | 10 | 10 | 10 | 10 | 10 | 10 |
| Total: | 100 | 100 | 100 | 100 | 100 | 100 | 100 |
| **Verhältnis NH/EP** | 1 | 1 | 1 | 1 | 1 | 1 | 1 |
| | | | | | | | |
| Viskosität | <3500 mPa*s | <3500 mPa*s | n.b. | 2800 mPa*s | <3500 mPa*s | <3500 mPa*s | <3500 mPa*s |
| Chemische Beständigkeit | nein* | nein* | n.b. | ja | ja | nein* | nein* |
| TG6 (23°C,50%/5°C,80%) | >24h* | >24h* | n.b. | 7h/15h | 7h/15h* | 6h/15h | 5h/17h |
| Lsm-frei | ja | ja | nein | ja | ja | nein | nein |
| Klebfrei nach Aushärtung | nein | nein | n.b. | ja | nein | ja | ja |

## Patentansprüche

1. Epoxidharz-Zusammensetzung umfassend
- eine Harz-Komponente, welche mindestens ein Epoxidharz A der Formel (I) aufweist 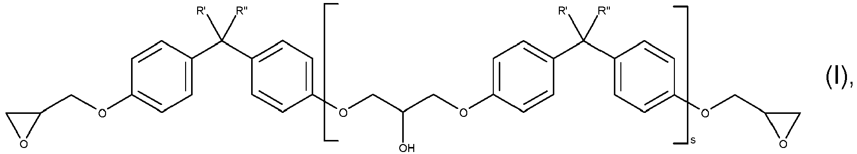 wobei die Substituenten R' und R" unabhängig voneinander entweder für H oder CH₃ stehen und der Index s für einen Wert von 0 bis 1, vorzugsweise kleiner als 0.2, steht, und
- eine Härter-Komponente, welche:
- mindestens einen Aminhärter **AH1,** umfassend ein dehydratisiertes Reaktionsprodukt aus:
- Cardanol;
- Formaldehyd oder Paraformaldehyd;
- mindestens einem Polyamin;
- mindestens einer Fettsäure oder Fettsäurepolymer, und
- mindestens einen Aminhärter **AH2** der Formel (II) aufweist 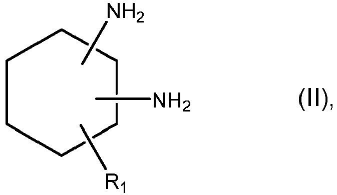 wobei R₁ für H oder CH₃ steht, aufweist.

2. Zusammensetzung gemäss Anspruch 1, **dadurch gekennzeichnet, dass** die Zusammensetzung weniger als 15 Gew.-% Epoxid-Novolake, bezogen auf das Gesamtgewicht der Epoxidharz-Zusammensetzung, aufweist.

3. Zusammensetzung gemäss einem der Ansprüche 1 bis 2, **dadurch gekennzeichnet, dass** das Molverhältnis von (Cardanol) : (Formaldehyd oder Paraformaldehyd) : (Polyamin) : (Fettsäure oder Fettsäurepolymer) = 1: 0,5-2,0: 0,5-2,0: 0,5-2,0 beträgt.

4. Zusammensetzung gemäss einem der vorgehenden Ansprüche, **dadurch gekennzeichnet, dass** es sich bei dem Aminhärter **AH2** der Formel (II) um 1-Methylcyclohexyl-2,4-diamin (2,4-MCDA), 1-Methylcyclohexyl-2,6-diamin (2,6-MCDA) oder ein Gemisch davon, insbesondere um ein Gemisch davon handelt.

5. Zusammensetzung gemäss einem der vorgehenden Ansprüche, **dadurch gekennzeichnet, dass** das Gewichtsverhältnis von **HA1/AH2** von 2-7, insbesondere 3-6, besonders bevorzugt von 4-5, beträgt.

6. Zusammensetzung gemäss einem der vorgehenden Ansprüche, **dadurch gekennzeichnet, dass** der Gehalt an Epoxidgruppen-haltigen Reaktivverdünnern in der Epoxidharz-Zusammensetzung im Bereich von 0 bis 5 Gewichts-%, insbesondere 0 bis 3.5 Gewichts-%, bezogen auf das Gesamtgewicht der Epoxidharz-Zusammensetzung, beträgt.

7. Zusammensetzung gemäss einem der vorgehenden Ansprüche, **dadurch gekennzeichnet, dass** der Anteil der Summe aus Aminhärter **AH1** und Aminhärter **AH2** mehr als 50 Gew.-%, insbesondere mehr als 60 Gew.-%, bezogen auf die Gesamtmenge an Polyaminen der Epoxidharz-Zusammensetzung beträgt.

8. Zusammensetzung gemäss einem der vorgehenden Ansprüche, **dadurch gekennzeichnet, dass** der Gehalt an Verdünnern in der Epoxidharz-Zusammensetzung im Bereich von 0 bis 7.5 Gewichts-%, insbesondere 0 bis 5 Gewichts-%, liegt.

9. Zusammensetzung gemäss einem der vorgehenden Ansprüche, **dadurch gekennzeichnet, dass** der Anteil an Füllstoffen 10 - 50 Gew.-%, insbesondere 20 - 40 Gew.-%, beträgt, bezogen auf das Gesamtwicht der Epoxidharz-Zusammensetzung.

10. Zusammensetzung gemäss einem der vorgehenden Ansprüche, **dadurch gekennzeichnet, dass** das Verhältnis der Anzahl von gegenüber Epoxidgruppen reaktiven Gruppen, insbesondere Aminwasserstoffe, gegenüber der Anzahl Epoxidgruppen bevorzugt im Bereich von 0.7 bis 1.3, insbesondere 0.8 bis 1.2, 0.85 bis 1.15, am meisten bevorzugt 0.9 bis 1.1, liegt.

11. Ausgehärtete Zusammensetzung erhalten aus der Aushärtung der Epoxidharz-Zusammensetzung gemäss einem der Ansprüche 1-10 nach dem Vermischen der Komponenten.

12. Verwendung der Zusammensetzung gemäss einem der Ansprüche 1 bis 11 als Beschichtung, insbesondere zum Schutz vor der Einwirkung von Chemikalien.

13. Verwendung gemäss Anspruch 12, **dadurch gekennzeichnet, dass** die Zusammensetzung in einer Schichtdicke im Bereich von 200 bis 1000 µm, 300 bis 900 µm, insbesondere 400 bis 800 µm, verwendet wird.

14. Verfahren zur Applikation einer Epoxidharz-Zusammensetzung gemäss einem der Ansprüche 1-11 als Beschichtung auf ein Substrat, insbesondere durch Spritzen, vorzugsweise mit einem Spritzdruck von mehr als 50 bar.

15. Artikel erhalten aus dem Verfahren gemäss Anspruch 14 oder der Verwendung gemäss einem der Ansprüche 12 bis 13.

## Claims

1. Epoxy resin composition comprising
- a resin component which has at least one epoxy resin **A** of formula (I) 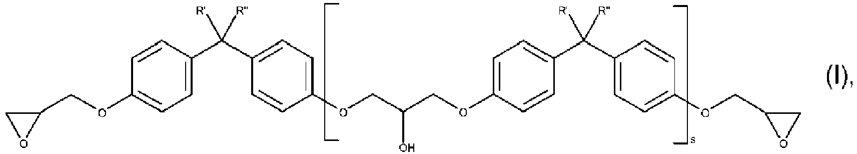 wherein the substituents R' and R" independently of one another represent either H or CH₃, and the index s represents a value of 0 to 1, preferably less than 0.2, and
- a hardener component which has:
- at least one amine hardener **AH1** comprising a dehydrated reaction product of:
- cardanol;
- formaldehyde or paraformaldehyde;
- at least one polyamine;
- at least one fatty acid or fatty acid polymer, and
- at least one amine hardener **AH2** of formula (II), 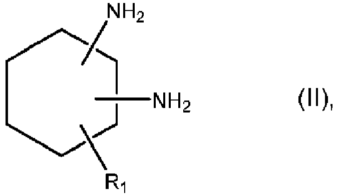 wherein R₁ represents H or CH₃.

2. Composition according to claim 1, **characterized in that** the composition has less than 15 wt.% epoxy novolaks based on the total weight of the epoxy resin composition.

3. Composition according to any of claims 1 to 2, **characterized in that** the molar ratio of (cardanol) : (formaldehyde or paraformaldehyde) : (polyamine): (fatty acid or fatty acid polymer) = 1 : 0.5-2.0 : 0.5-2.0 : 0.5-2.0.

4. Composition according to any of the preceding claims, **characterized in that** the amine hardener **AH2** of formula (II) is 1-methylcyclohexyl-2,4-diamine (2,4-MCDA), 1-methylcyclohexyl-2,6-diamine (2,6-MCDA) or a mixture thereof, in particular a mixture thereof.

5. Composition according to any of the preceding claims, **characterized in that** the weight ratio of **HA1/AH2** is from 2-7, in particular 3-6, particularly preferably from 4-5.

6. Composition according to any of the preceding claims, **characterized in that** the content of reactive diluents containing epoxy groups in the epoxy resin composition is in the range from 0 to 5 wt.%, in particular 0 to 3.5 wt.%, based on the total weight of the epoxy resin composition.

7. Composition according to any of the preceding claims, **characterized in that** the proportion of the sum of amine hardener **AH1** and amine hardener **AH2** is more than 50 wt.%, in particular more than 60 wt.%, based on the total amount of polyamines in the epoxy resin composition.

8. Composition according to any of the preceding claims, **characterized in that** the content of diluents in the epoxy resin composition is in the range from 0 to 7.5 wt.%, in particular 0 to 5 wt.%.

9. Composition according to any of the preceding claims, **characterized in that** the proportion of fillers is 10-50 wt.%, in particular 20-40 wt.%, based on the total weight of the epoxy resin composition.

10. Composition according to any of the preceding claims, **characterized in that** the ratio of the number of groups reactive toward epoxy groups, in particular amine hydrogens, relative to the number of epoxy groups is preferably in the range from 0.7 to 1.3, in particular 0.8 to 1.2, 0.85 to 1.15, most preferably 0.9 to 1.1.

11. Cured composition obtained by curing the epoxy resin composition according to any of claims 1-10 after mixing the components.

12. Use of the composition according to any of claims 1 to 11 as a coating, in particular for protection against the action of chemicals.

13. Use according to claim 12, **characterized in that** the composition is used in a layer thickness in the range from 200 to 1000 µm, 300 to 900 µm, in particular 400 to 800 µm.

14. Method for applying an epoxy resin composition according to any of claims 1-11 as a coating to a substrate, in particular by spraying, preferably at a spray pressure of more than 50 bar.

15. Article obtained from the method according to claim 14 or from the use according to any of claims 12 to 13.

## Revendications

1. Composition de résine époxy comprenant
- un composant en résine, lequel présente au moins une résine époxy **A** de formule (I) 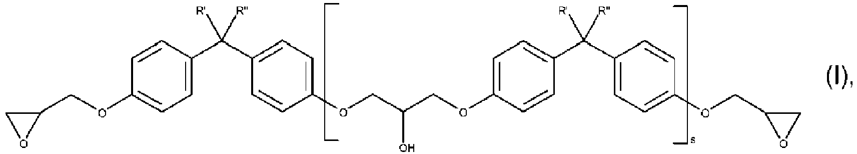 dans laquelle les substituants R' et R" sont indépendamment l'un de l'autre soit H soit CH₃ et l'indice s est une valeur de 0 à 1, de préférence inférieure à 0,2, et
- un composant durcisseur, lequel présente :
- au moins un durcisseur aminé **AH1,** comprenant un produit de réaction déshydraté composé de :
- cardanol ;
- formaldéhyde ou paraformaldéhyde ;
- au moins une polyamine ;
- au moins un acide gras ou polymère d'acide gras, et
- au moins un durcisseur aminé **AH2** de formule (II) 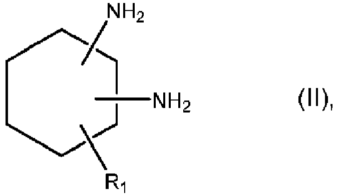 dans laquelle R₁ est soit H soit CH₃.

2. Composition selon la revendication 1, **caractérisée en ce que** la composition présente moins de 15 % en poids de novolaques époxy, sur la base du poids total de la composition de résine époxy.

3. Composition selon l'une quelconque des revendications 1 à 2, **caractérisée en ce que** le rapport molaire de (cardanol) : (formaldéhyde ou paraformaldéhyde) : (polyamine) : (acide gras ou polymère d'acide gras) = 1 : 0,5-2,0 : 0,5-2,0 : 0,5-2,0.

4. Composition selon l'une quelconque des revendications précédentes, **caractérisée en ce que** le durcisseur aminé **AH2** de formule (II) est du 1-Méthylcyclohéxyl-2,4-diamin (2,4-MCDA), du 1-Méthylcyclohéxyl-2,6-diamin (2,6-MCDA) ou un mélange de ceux-ci, en particulier un mélange de ceux-ci.

5. Composition selon l'une quelconque des revendications précédentes, **caractérisée en ce que** le rapport de poids de **HA1/AH2** est de 2-7, en particulier de 3-6, encore plus préférablement de 4-5.

6. Composition selon l'une quelconque des revendications précédentes, **caractérisée en ce que** la teneur en diluants réactifs contenant des groupes époxy dans la composition de résine époxy se situe dans la plage de 0 à 5 % en poids, en particulier de 0 à 3,5 % en poids, sur la base du poids total de la composition de résine époxy.

7. Composition selon l'une quelconque des revendications précédentes, **caractérisée en ce que** la part de la somme de durcisseurs aminés **AH1** et de durcisseurs aminés **AH2** est supérieure à 50 % en poids, en particulier supérieure à 60 % en poids, sur la base de la quantité totale de polyamines de la composition de résine époxy.

8. Composition selon l'une quelconque des revendications précédentes, **caractérisée en ce que** la teneur en diluants dans la composition de résine époxy se situe dans la plage de 0 à 7,5 % en poids, en particulier de 0 à 5 % en poids.

9. Composition selon l'une quelconque des revendications précédentes, **caractérisée en ce que** la part de matières de remplissage est de 10 à 50 % en poids, en particulier de 20 à 40 % en poids, sur la base du poids total de la composition de résine époxy.

10. Composition selon l'une quelconque des revendications précédentes, **caractérisée en ce que** le rapport du nombre de groupes réactifs par rapport au groupe époxy, en particulier des hydrogènes d'amine, par rapport au nombre de groupes époxy, se situe de préférence dans la plage de 0,7 à 1,3, en particulier de 0,8 à 1,2, 0,85 à 1,15, le plus préférablement de 0,9 à 1,1.

11. Composition durcie obtenue à partir du durcissement de la composition de résine époxy selon l'une quelconque des revendications 1 à 10 après le mélange des composants.

12. Utilisation de la composition selon l'une quelconque des revendications 1 à 11 comme revêtement, en particulier pour la protection contre les effets de produits chimiques.

13. Utilisation selon la revendication 12, **caractérisée en ce que** la composition est utilisée dans une épaisseur de couche située dans la plage de 200 à 1 000 µm, de 300 à 900 µm, en particulier de 400 à 800 µm.

14. Procédé pour l'application d'une composition de résine époxy selon l'une quelconque des revendications 1 à 11 comme revêtement sur un substrat, en particulier par pulvérisation, de préférence avec une pression de pulvérisation supérieure à 50 bar.

15. Article obtenu à partir du procédé selon la revendication 14 ou de l'utilisation selon l'une quelconque des revendications 12 à 13.
